# EUROPEAN PATENT APPLICATION

(11) **EP 1 868 180 A2**
(43) Date of publication of application: **19.12.2007**
(21) Application number: 07109777.8
(22) Date of filing: 07.06.2007
(51) Int. Cl.: G09G 5/00

(54) **Display apparatus and control method thereof**

(30) Priority: 13.06.2006 KR 20060052910
(71) Applicant: Samsung Electronics Co., Ltd., Suwon-si, Gyeonggi-Do (KR)
(72) Inventor: Kim, Ji-won, Seoul (KR)
(74) Representative: Grootscholten, Johannes A.M.

(57) **Abstract**

A display apparatus and control method for improving the reliability of downloading information through a DDC communication line by cutting the connection of other ICs of the display apparatus to the video signal source when the display apparatus enters a mode where information can be downloaded into the EDID storing unit of the display through the DDC communication line.

An exemplary embodiment of the display apparatus connected to an external source, comprises a data storing unit (30) that exchanges data with the external apparatus through a bi-directional communication line; a video signal processing unit (40) connected to the bi-directional communication line; a write function controlling unit (60) that outputs to the data storing unit (30) a write control signal to control a write function of the data storing unit (30); and a switching unit (70) that disconnects the bi-directional communication line from the video signal processing unit (40) according to control of the write function controlling unit (60).

## Description

### BACKGROUND OF THE INVENTION

### Field of the Invention

The present invention relates to a display apparatus. More particularly, the present invention relates to a display apparatus capable of improving the reliability of downloading information through a DDC communication line, and a control method thereof.

### Description of the Related Art

Typically, a display apparatus comprises a video signal input unit to which a video signal is input externally, a video signal processing unit that processes the input video signal, and a display unit that displays videos according to the processed video signal.

Such a display apparatus may have an EEPROM (Electrically Erasable and Programmable Read Only Memory) as a memory in which its own specification information (i.e., EDID (Extended Display Identification Data)) is stored for compatibility with a computer, a set-top box and so on, which are sources that provide video signals. When the display apparatus is connected to the computer, the display apparatus sends the specification information (EDID) stored in the EEPROM to the computer through a DDC (Display Data Channel) communication line. Upon receiving the specification information (EDID), the computer causes the display apparatus to automatically display an optimal picture within a range of the display apparatus supporting ability, regardless of the software being used by a user. The EEPROM used herein is a read/write memory. The specification information (EDID) is stored in the EEPROM of the display apparatus when the specification information (EDID) is downloaded into the EEPROM through the DDC communication line. This is accomplished by manipulating, during the course of manufacturing the display apparatus, a PC to perform a separate process when the display apparatus is in a standby mode.

Recently, since ICs (Integrated Circuits), such as a video signal processing unit, an EEPROM and so on, are integrated in one chip, the current trend is for ICs to share one DDC communication line. However, when the specification (EDID) is downloaded into the EEPROM during the course of manufacturing a display apparatus, there exists a problem of a reliability deterioration of the downloading, due to the other ICs connected through the DDC communication line.

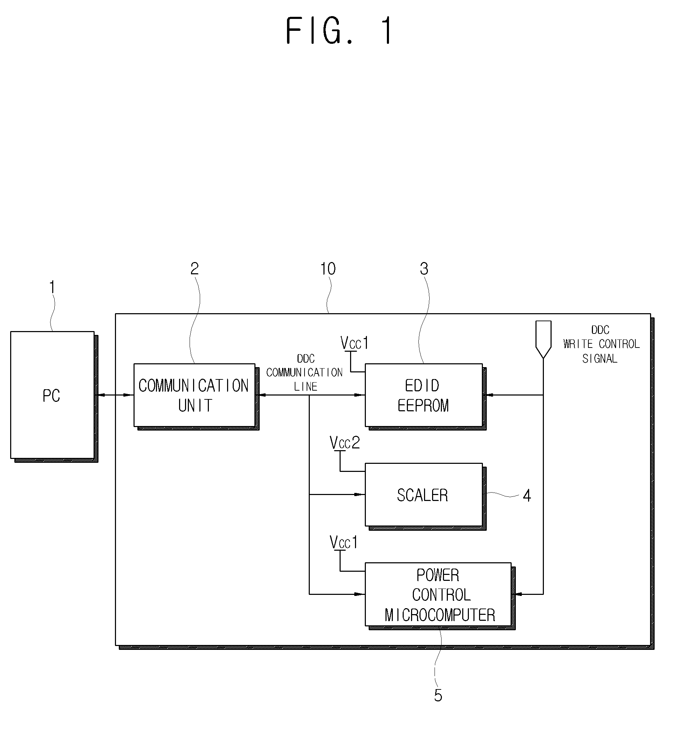

The problem of the reliability deterioration of the specification information (EDID) downloading in the above conventional display apparatus will be described with reference to FIG. 1.

Referring to FIG. 1, in general, an EDID EEPROM 3 and a power control microcomputer 5 are enabled by a standby voltage Vcc1 in a standby mode of a display apparatus 10. A scaler 4 corresponding to a video signal processing unit is enabled in only a power-on mode (hereinafter referred to as 'normal mode') of the display apparatus 10 by a normal voltage Vcc2 having a voltage different from the standby voltage Vcc1. As mentioned earlier, ICs such as a scaler 4, an EDID EEPROM 3, a power control microcomputer 5 and so on, are one-chipped and share a DDC communication line. For the downloading of specification information (EDID) and a power control program into the EDID EEPROM 3 and the power control microcomputer 5 in the standby mode, a writable-only DDC write control signal is applied to the EDID EEPROM 3 and the power control microcomputer 5 in the standby mode. Moreover, a readable-only DDC write control signal is applied to the EDID EEPROM 3 and the power control microcomputer 5 in the normal mode.

For the downloading of the specification information (EDID), a PC 1 is connected to a communication unit 2 of the display apparatus 10 and the display apparatus 10 enters the standby mode. At this time, the EDID EEPROM 3 and the power control microcomputer 5 are enabled by the standby voltage Vcc1 and the scaler 4 is disabled. Then, the PC 1 applies a signal to download the specification information (EDID) to the EDID EEPROM 3 through the DDC communication line. However, since the disabled scaler 4 has very small resistance, the specification information (EDID) download signal applied to the EDID EEPROM 3 through the DDC communication line may be introduced into the scaler 4, which may result in difficulty in applying the specification information (EDID) download signal to the EDID EEPROM 3 properly.

Accordingly, there is a need for an improved display apparatus, which is capable of improving the reliability of downloading information from a video signal source into an EDID storing unit of the display apparatus through a DDC communication line, and a control method thereof.

### SUMMARY OF THE INVENTION

Exemplary embodiments of the present invention address at least the above problems and/or disadvantages and provide at least the advantages described below. Accordingly, an aspect of an exemplary embodiment of the present invention is to provide a display apparatus, which is capable of improving the reliability of downloading information, from a video signal source into an EDID storing unit of the display apparatus through a DDC communication line, by cutting the connection of other ICs of the display apparatus to the video signal source when the display apparatus enters a mode wherein information can be downloaded into the EDID storing unit through the DDC communication line.

An exemplary embodiment of the present invention can be implemented by providing a display apparatus connected to an external apparatus, comprising: a data storing unit that exchanges data with the external apparatus through a bi-directional communication line; a video signal processing unit connected to the bi-directional communication line; a write function controlling unit that outputs a write control signal to the data storing unit, to control a write function of the data storing unit; and a switching unit that disconnects the bi-directional communication line from the video signal processing unit according to the control of the write function controlling unit.

According to an exemplary embodiment of the present invention, the write function controlling unit outputs a write disable signal to disable the write function of the data storing unit in a power-on mode of the display apparatus and outputs a write enable signal to enable the write function of the data storing unit in a standby mode of the display apparatus.

According to an exemplary embodiment of the present invention, the video signal processing unit operates in the power-on mode by applying to the data storing unit a first driving voltage different in level from a second driving voltage.
According to an exemplary embodiment of the present invention, the switching unit is connected to the bi-directional communication line, and the switching unit is switched off when the write enable signal is applied to the switching unit and is switched on when the write disable signal is applied to the switching unit.

According to an exemplary embodiment of the present invention, the switching unit comprises a first switch that is switched on to ground the second driving voltage when the write disable signal is applied to the switching unit and is switched off to output the second driving voltage when the write enable signal is applied to the switching unit, and an inverted switching unit that disconnects between the bi-directional communication line when the second driving voltage is input from the first switch to the inverting and switching unit and connects between the bi-directional communication line if the second driving voltage is not input from the first switch to the inverting and switching unit.

According to an exemplary embodiment of the present invention, the inverted switching unit comprises an inverting unit that outputs a low level signal when the second driving voltage is input from the first switch to the inverting unit and outputs a high level signal when the second driving voltage is not input from the first switch to the inverting unit, and a second switch connected to the bi-directional communication line, the second switch being switched off when the low level signal is input from the inverting unit to the second switch and being switched on when the high level signal is input from the inverting unit to the second switch.

According to an exemplary embodiment of the present invention, the write disable signal comprises the high level signal and the write enable signal comprises the low level signal.

According to an exemplary embodiment of the present invention, the bi-directional communication line comprises a DDC (Display Data Channel) communication line.

According to an exemplary embodiment of the present invention, the data storing unit comprises an EDID (Extended Display Identification Data) EEPROM in which EDID information is stored.

According to an exemplary embodiment of the present invention, the display apparatus further comprises a display unit that displays a video based on a video signal processed by the video signal processing unit.

Aspects of an exemplary embodiment of the present invention can be achieved by providing a control method of an display apparatus comprising a data storing unit that exchanges data with an external apparatus through a bi-directional communication line, and a video signal processing unit connected to the bi-directional communication line, the control method comprising: determining whether the display apparatus is in a standby mode; outputting a write enable signal to enable a write function of the data storing unit to the data storing unit if it is determined that the display apparatus is in the standby mode; and disconnecting the bi-directional communication line from the video signal processing unit when the write enable signal is output to the data storing unit.

According to an exemplary embodiment of the present invention, the control method further comprises: determining whether the display apparatus is in a power-on mode; outputting a write disable signal to disable the write function of the data storing unit to the data storing unit if it is determined that the display apparatus is in the power-on mode; and connecting the bi-directional communication line with the video signal processing unit when the write disable signal is output to the data storing unit.

According to an exemplary embodiment of the present invention, the video signal processing unit operates in the power-on mode by a first driving voltage different in level from a second driving voltage applied to the data storing unit.

According to an exemplary embodiment of the present invention, the write disable signal comprises a high level signal and the write enable signal comprises a low level signal.

According to an exemplary embodiment of the present invention, the bi-directional communication line comprises a DDC communication line.

According to an exemplary embodiment of the present invention, the data storing unit comprises an EDID EEPROM in which EDID information is stored.

According to an exemplary embodiment of the present invention, the display apparatus further comprises a display unit that displays a video based on a video signal processed by the video signal processing unit.

An exemplary embodiment of the present invention can be implemented by providing a computer-readable recording medium storing a program, comprising: a first set of instructions for determining whether a display apparatus is in a standby mode; a second set of instructions for outputting a write enable signal to enable a write function of a data storing unit if it is determined that the display apparatus is in standby mode; and a third set of instructions for disconnecting the bi-directional communication line from the video signal processing unit when the write enable signal is output to the data storing unit.

According to an exemplary embodiment of the present invention, the instructions further determine whether the display apparatus is in a power-on mode; output a write disable signal to the data storing unit to disable the write function of the data storing unit if it is determined that the display apparatus is in the power-on mode; and connect the bi-directional communication line with the video signal processing unit when the write disable signal is output to the data storing unit.

According to an exemplary embodiment of the present invention, the instructions further displays a video based on a video signal processed by the video signal processing unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain embodiments of the present invention will become apparent from the following description taken in conjunction with the accompanying drawings, in which:
FIG. 1 is a control block diagram illustrating a configuration of a conventional display apparatus connected to a PC;
FIG. 2 is a control block diagram of a display apparatus according to an exemplary embodiment of the present invention;
FIG. 3A is a control block diagram of a display apparatus according to a first exemplary embodiment of the present invention;
FIG. 3B is a control block diagram of a display apparatus according to a second exemplary embodiment of the present invention; and
FIG. 4 is a control flow chart illustrating an operation of the display apparatus according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Reference will now be made in detail to the exemplary embodiments of the present invention. The Exemplary embodiments of the present invention are described below with reference to the drawing figures.

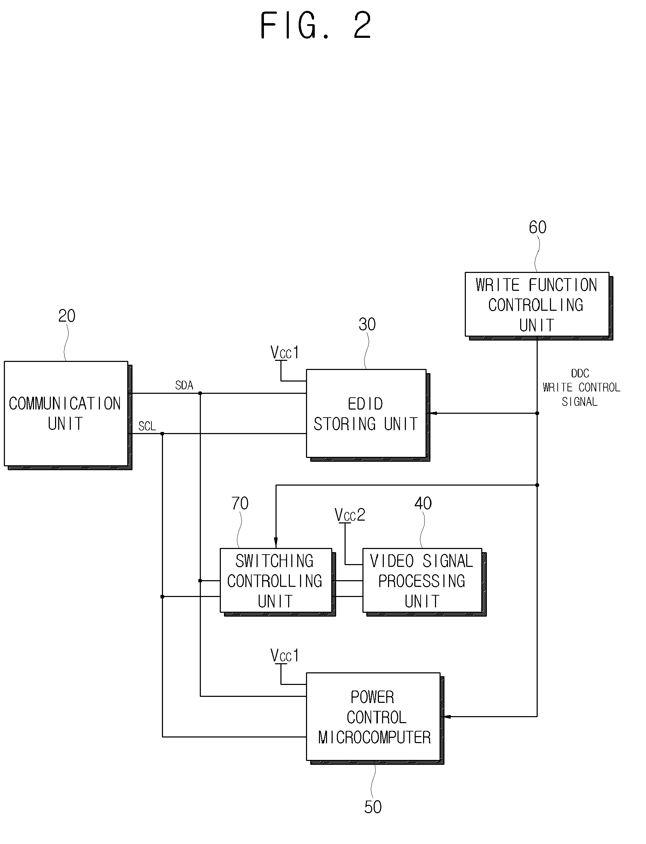

FIG. 2 is a control block diagram of a display apparatus according an exemplary embodiment of the present invention.

Referring to FIG. 2, a display apparatus according to the principal concept of an exemplary embodiment of the present invention comprises a communication unit 20 that communicates with an external apparatus (not shown), an EDID storing unit 30 connected to the communication unit 20 through DDC (Display Data Channel) communication lines SDA and SCL for communication with the external apparatus, a video signal processing unit 40 connected to the DDC communication lines SDA and SCL, a write function controlling unit 60 that outputs a DDC write control signal to the EDID storing unit 30 to control a write function of the EDID storing unit 30, and a switching controlling unit 70 that cuts connection of the video signal processing unit 40 to the DDC communication lines SDA and SCL when a DDC write enable signal is output from the write function controlling unit 60. Here, the EDID storing unit 30 and the video signal processing unit 40 may be one-chipped and share the DDC communication lines SDA and SCL, as shown in FIG. 2.

The communication unit 20 may be provided as a D-sub communication port or a DVI communication port for communication with the external apparatus (not shown) such as a computer, a set-top box and so on, and may comprise DDC data pins (not shown) and DDC clock pins (not shown).

The EDID storing unit 30 may be provided as a memory in which specification information (EDID) (Extended Display Identification Data) of the display apparatus is stored. The specification information (EDID) may include information about a manufacture ID that identifies manufacturing companies of display apparatuses, a model name ID, availability of DPMS (Display Power Management Signaling) support, picture characteristics, supporting timing, and so on. Preferably, but not necessarily, the EDID storing unit 30 comprises an EEPROM. The EDID storing unit 30 may perform a write/read function according to the DDC write control signal applied from the write function controlling unit 60. Specifically, the EDID storing unit 30 can perform a write function when a DDC write enable signal is applied thereto, and accordingly download the specification information (EDID) provided by an external apparatus. When a DDC write disable signal is applied to the EDID storing unit 30, the EDID storing unit 30 can perform only a read function, and accordingly, an external apparatus can read specification information (EDID) stored in the EDID storing unit 30.

In addition, when the display unit is in a standby mode, a first standby driving voltage Vcc1 is supplied to enable the EDID storing unit 30. In other words, it is preferable, but not necessary, that the EDID storing unit 30 is enabled by the first driving voltage Vcc1 supplied from a normal power source when the display apparatus is in a power on mode (hereinafter referred to as 'normal mode'), while it is enabled by the first driving voltage Vcc1 supplied from a standby power source in the standby mode.

Here, the standby mode refers to a mode where the display apparatus is powered off by a remote controller (not shown) or an operation key (not shown). It is preferable, but not necessary, that the standby mode enables only a minimum number of functional units that can recognize the display apparatus power on commands. The standby mode is typically defined by a power control standard of an existing display apparatus. In other words, the standby mode corresponds to a case when the display apparatus is powered off with its plug inserted in an external apparatus such as a computer.

The video signal processing unit 40 processes a video signal, which is input to the display apparatus, into a signal having a format displayable on a display unit (not shown). The video signal processing unit 40 may comprise a scaler that up-scales or down-scales an input video signal. The video signal processing unit 40 is enabled by the normal second driving voltage Vcc2 in the normal mode of the display apparatus, while it is disabled in the standby mode of the display apparatus with no application of the second driving voltage Vcc2. That is, the video signal processing unit 40 operates only in the normal mode of the display apparatus.

When the video signal processing unit 40 is enabled in the normal mode of the display apparatus, it can exchange control data with the external apparatus through the DDC communication lines SDA and SCL. Here, it is preferable, but not necessary, that the first driving voltage Vcc1 is different in its level from the second driving voltage Vcc2. Typically, the first driving voltage Vcc1 is 5 volts and the second driving voltage Vcc2 is 3.3 volts.

The write function controlling unit 60 outputs a DDC write control signal to control a write function of the EDID storing unit 30. Specifically, the write function controlling unit 60 outputs the DDC write disable signal to disable the write function of the EDID storing unit 30 in the normal mode of the display apparatus, while outputting a DDC write enable signal to enable the write function of the EDID storing unit 30 in the standby mode of the display apparatus. Then, as described above, the EDID storing unit 30 can perform the write function in the standby mode, thereby downloading specification information (EDID) provided by an external apparatus. The EDID storing unit 30 can perform the read function only in the normal mode, and accordingly, an external apparatus can read the specification information (EDID) stored in the EDID storing unit 30. Here, it is preferable, but not necessary, that the write function controlling unit 60 outputs a high level signal as the DDC write disable signal and a low level signal as the DDC write enable signal.

The write function controlling unit 60 may be embodied by a CPU or any other ICs which may be enabled in the standby mode and the normal mode.

The switching controlling unit 70 disconnects the DDC communication lines SDA and SCL from the video signal processing unit 40 when the DDC write enable signal is output from the write function controlling unit 60, but connects the DDC communication lines SDA and SCL with the video signal processing unit 40 when the DDC write disable signal is output from the write function controlling unit 60.

Here, the switching controlling unit 70 may have a configuration of hardware only that receives the DDC write enable/DDC write disable signal output from the write function controlling unit 60 and disconnects/connects the DDC communication lines SDA and SCL with the video signal processing unit 40 based on the received DDC write enable/DDC write disable signal. Alternatively, the switching controlling unit 70 may include a software in its configuration that determines in various ways whether the DDC write control signal output from the write function controlling unit 60 is the DDC write enable signal or the DDC write disable signal and disconnects/connects the DDC communication lines SDA and SCL with the video signal processing unit 40 based on the determination. Since (an enable or disable of) the DDC write signal outputted from the write controlling unit 60 depends on the (standby or normal) modes of the display apparatus, the switching controlling unit 70 may disconnect/connect the DDC communication lines SDA and SCL with the video signal processing unit 40 based on a determination of whether the display apparatus is in the standby mode or the normal mode.

Accordingly, when the external apparatus applies a signal to download the specification information (EDID) to the EDID storing unit 30 through the DDC communication lines in the standby mode of the display apparatus, the display apparatus can download the specification information (EDID) properly by disconnecting the DDC communication lines SDA and SCL with the video signal processing unit 40, thereby completely preventing the signal to download the specification information (EDID) from being introduced into the video signal processing unit 40.

The display apparatus according to an exemplary embodiment of the present invention may further comprise a power control microcomputer 50, as shown in FIG. 2.

The power control microcomputer 50 may be one-chipped with the EDID storing unit 30 and the video signal processing unit 40, and share the DDC communication lines SDA and SCL with the EDID storing unit 30 and the video signal processing unit 40. The power control microcomputer 50 determines whether or not an instruction to power the display apparatus on is input. If it is determined that the instruction is input thereto, the power control microcomputer stores a power management program to perform a process of powering the display apparatus on. In other words, like the EDID storing unit 30, it is preferable, but not necessary, that the power control microcomputer 50 is enabled by the first driving voltage Vcc1 supplied from the normal power source in the normal mode of the display apparatus, while it is enabled by the first driving voltage Vcc1 supplied from the standby power source in the standby mode of the display apparatus.

Similar to the way of downloading the specification information (EDID), the power management program is stored in the power control microcomputer 50 through the DDC communication lines SDA and SCL in standby mode in the course of manufacturing the display apparatus. In other words, as shown in FIG. 2, the power control microcomputer 50 can perform a write function according to the DDC write enable signal output from the write function controlling unit 60 in the standby mode, thereby downloading a power management program provided from the external apparatus. But the power control microcomputer can not perform the write function according to the DDC write disable signal output from the write function controlling unit 60 in the normal mode, thereby executing the power management program pre-stored in the power control microcomputer 50.

Accordingly, when the external apparatus applies a signal to download the power management program to the power control microcomputer 50 through the DDC communication lines in the standby mode of the display apparatus, the display apparatus can download the power control program properly by disconnecting the DDC communication lines SDA and SCL from the video signal processing unit 40, thereby completely preventing the signal to download the power management program from being introduced into the video signal processing unit 40.

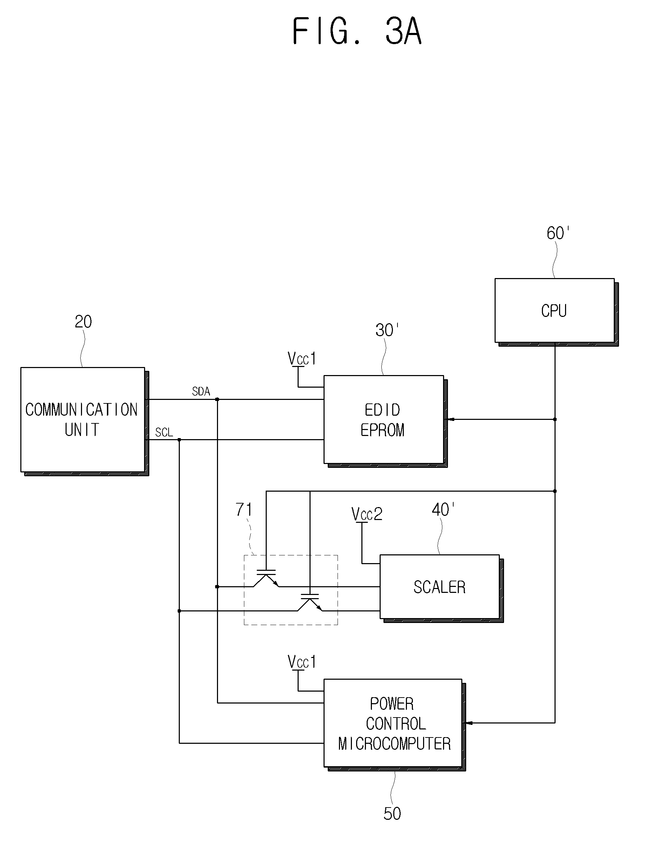

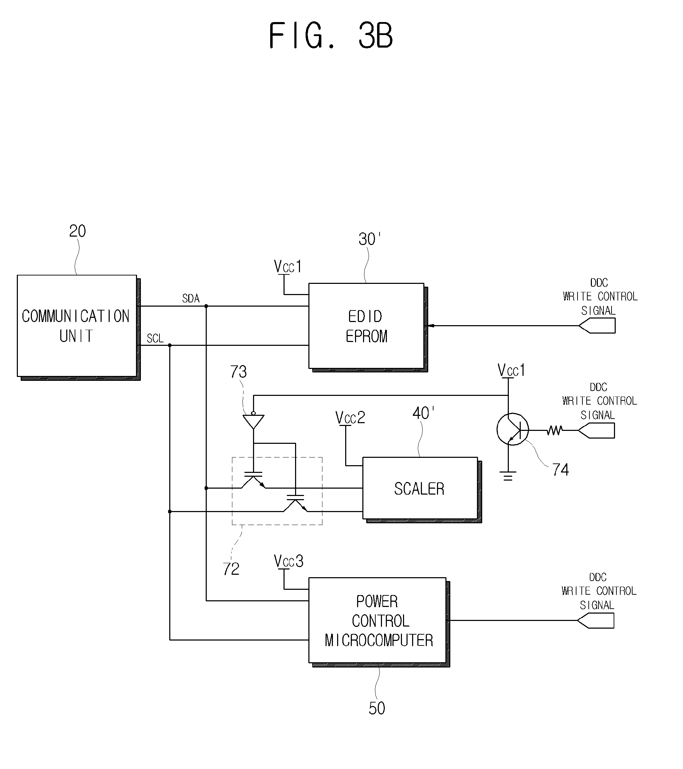

Hereinafter, exemplary embodiments of the switching controlling unit 70 will be described with reference to FIGS. 3A and 3B.

Referring to FIG. 3A, a display apparatus according to a first exemplary embodiment of the present invention comprises a communication unit 20, an EDID EPROM 30', a scaler 40', a power control microcomputer 50, a CPU 60', and a switch 71 corresponding to the switching controlling unit 70 shown in FIG. 2.

Here, the functions of the EDID EPROM 30', the scaler 40' and the CPU 60' correspond to the functions of the EDID storing unit 30, the video signal processing unit 40, and the write function controlling unit 60, which are shown in FIG. 2, respectively.

The switch 71, which is connected to DDC communication lines SDA and SCL, receives a DDC write control signal including DDC write enable/DDC write disable signals output from the CPU 60' and disconnects/connects between the DDC communication lines SDA and SCL and the scaler 40' based on the received DDC write enable/DDC write disable signals. The switch 71 comprises FETs (Field Effect Transistors) having gate electrodes applied with the DDC write control signal output from the CPU 60', drain electrodes connected to the DDC communication lines SDA and SCL, and source electrodes connected to the scaler 40'. With this configuration, the switch 71 is switched off to disconnect the DDC communication lines SDA and SCL from the scaler 40' when the DDC write enable signal (low level signal) is applied to the switch 71, and is switched on to connect the DDC communication lines SDA and SCL with the scaler 40' when the DDC write disable signal (high level signal) is applied to the switch 71.

Now, a display apparatus according to a second exemplary embodiment of the present invention will be described with reference to FIG. 3B. As shown in this figure, the display apparatus comprises a communication unit 20, an EDID EPROM 30', a scaler 40', a power control microcomputer 50, a first switch 74, an inverting unit 73, and a second switch 72. Here, the first switch 74 and the inverting unit 73 and the second switch 72 correspond to the switching controlling unit 70 shown in FIG. 2.

In addition, the functions of the EDID EPROM 30' and the scaler 40' correspond to the functions of the EDID storing unit 30 and the video signal processing unit 40, which are shown in FIG. 2, respectively. Moreover, the DDC write control signal is output from the write function controlling unit 60 shown in FIG. 2.

The first switch 74 is switched on to ground a first driving voltage Vcc1 when a DDC write disable signal is applied to the first switch 74, and is switched off to output the first driving voltage Vcc1 when a DDC write enable signal is applied to the first switch 74. The first switch 74 comprises a transistor having a base that receives the DDC write control signal, a collector connected to the first driving voltage Vcc1, and an emitter connected to ground. With this configuration, the first switch 74 is switched off to output the first driving voltage Vcc1 to the inverting unit 73 described later when a low level signal is applied to the first switch 74, and is switched on to ground the first driving voltage Vcc1 when a high level signal is applied to the first switch 74.

The inverted switching unit (72,73) disconnects the DDC communication lines SDA and SCL from the scaler 40' when the first driving voltage Vcc1 is input from the first switch 74 to the inverting and switching unit 72, and connects the DDC communication lines SDA and SCL with the scaler 40' if the first driving voltage Vcc1 is not input from the first switch 74 to the inverting and switching unit 72.

The inverted switching unit (72,73) comprises the inverting unit 73 connected to the collector of the first switch 74 and the second switch 72 connected to the DDC communication lines SDA and SCL. The inverter 73 outputs a low level signal when the first driving voltage Vcc1 is input thereto, and outputs a high level signal when the first driving voltage Vcc1 is not input thereto. The second switch 72 disconnects the DDC communication lines SDA and SCL from the scaler 40' when the low level signal is input from the inverter 73 to the second switch 72, and connects the DDC communication lines SDA and SCL with the scaler 40' when the high level signal is input from the inverter 73 to the second switch 72. The second switch 72 comprises FETs having gate electrodes applied with the low/high level signals output from the inverter 73, drain electrodes connected to the DDC communication lines SDA and SCL, and source electrodes connected to the scaler 40'.

Thus, the display apparatus according to the above exemplary embodiments is capable of improving reliability of the download of the specification information (EDID) or the power management program by disconnecting the DDC communication lines from the video signal processing unit based on the DDC write control signal in the standby mode of the display apparatus.

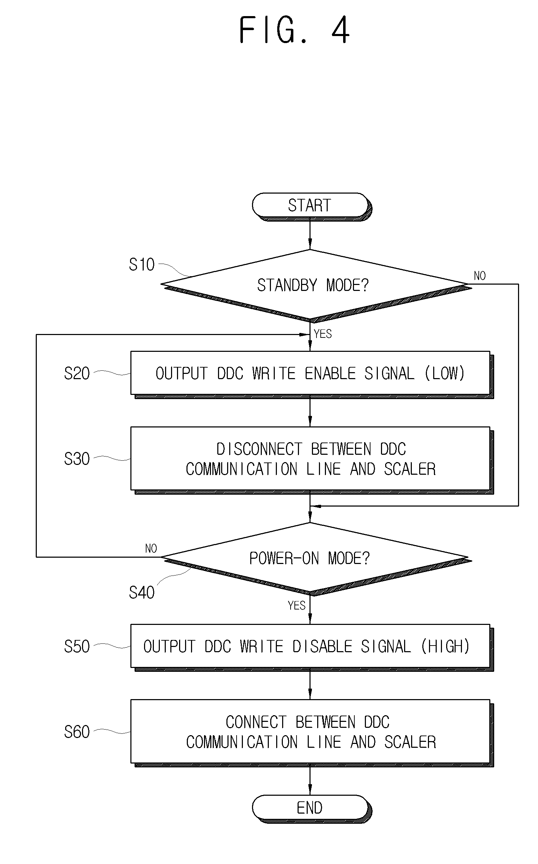

Hereinafter, a control flow of the display apparatus according to an exemplary embodiment of the present invention will be described with reference to FIGs. 3A and 4.

First, it is determined whether or not a power mode of the display apparatus is a standby mode at operation S10. It is preferable, but not necessary, that such determination on the power mode may be made by ICs that may always enabled in both standby and normal modes, particularly, the CPU 60 shown in FIG. 3A. If it is determined that the power mode of the display apparatus is the standby mode, the CPU 60' outputs a DDC write enable signal (low level signal) to the EDID EPROM 30' and the power control microcomputer 50 at operation S20. Upon receiving the DDC write enable signal, the EDID EPROM 30' can perform a write function to download the specification information (EDID) provided from an external apparatus and the power control microcomputer 50 can perform a write function to download the power management program provided from an external apparatus.

When the DDC write enable signal (low level signal) is input to the switch 71, the switch 71 is switched off to disconnect the DDC communication lines SDA and SCL from the scaler 40' at operation S30. Such disconnection has no effect on the operation of the scaler 40', since the scaler 40' is originally disabled in the standby mode.

Next, the CPU 60' continuously determines whether the power mode of the display apparatus is a normal mode at operation S40. If it is determined that the power mode is the normal mode, the CPU 60' outputs a DDC write disable signal (high level signal) to the EDID EPROM 30' and the power control microcomputer 50 at operation S50. Upon receiving the DDC write disable signal, the EDID EPROM 30' allows an external apparatus only to read specification information (EDID) stored in the EDID EPROM 30', and the power control microcomputer 50 executes the power management program stored in the power control microcomputer 50.

When the DDC write disable signal (high level signal) is input to the switch 71, the switch 71 is switched on to connect the DDC communication lines SDA and SCL with the scaler 40' at operation S60. Such connection allows the scaler 40', the EDID EPROM 30', and the power control microcomputer 50 to communicate with an external apparatus through the DDC communication lines SDA and SCL in the normal mode of the display apparatus.

As described above, the control method of the display apparatus is capable of improving reliability of the download of the specification information (EDID) or the power management program by disconnecting the DDC communication lines from the video signal processing unit based on the DDC write control signal in the standby mode of the display apparatus.

As apparent from the above description, an exemplary embodiment of the present invention provides a display apparatus, which is capable of improving reliability of information download from a video signal source into an EDID storing unit of the display apparatus through a DDC communication line by disconnecting other ICs of the display apparatus from the video signal source when the display apparatus enters a mode where information can download into the EDID storing unit through the DDC communication line.

The present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While certain exemplary embodiments of the invention have been shown and described herein with reference to certain preferred embodiments thereof, it will be understood by those skilled in the art that various changes in form and details may be made therein without departing from the spirit and scope of the invention as defined by the appended claims and their equivalents.

## Claims

1. A display apparatus connected to an external apparatus, comprising:
a data storing unit that exchanges data with the external apparatus through a bi-directional communication line;
a video signal processing unit connected to the bi-directional communication line;
a write function controlling unit that outputs to the data storing unit a write control signal to control a write function of the data storing unit; and
a switching unit that disconnects the bi-directional communication line from the video signal processing unit according to control of the write function controlling unit.

2. The display apparatus according to claim 1, wherein the write function controlling unit outputs a write disable signal to disable the write function of the data storing unit in a power-on mode of the display apparatus, and outputs a write enable signal to enable the write function of the data storing unit in a standby mode of the display apparatus.

3. The display apparatus according to claim 2, wherein the video signal processing unit operates in the power-on mode by a first driving voltage different in level from a second driving voltage applied to the data storing unit.

4. The display apparatus according to claim 3, wherein the switching unit is connected to the bi-directional communication line and the switching unit is switched off when the write enable signal is applied to the switching unit and is switched on when the write disable signal is applied to the switching unit.

5. The display apparatus according to claim 3, wherein the switching unit comprises a first switch that is switched on to ground the second driving voltage when the write disable signal is applied to the switching unit and is switched off to output the second driving voltage when the write enable signal is applied to the switching unit, and an inverted switching unit that disconnects between the bi-directional communication line when the second driving voltage is input from the first switch to the inverting and switching unit and connects between the bi-directional communication line if the second driving voltage is not input from the first switch to the inverting and switching unit.

6. The display apparatus according to claim 5, wherein the inverted switching unit comprises an inverting unit that outputs a low level signal when the second driving voltage is input from the first switch to the inverting unit and outputs a high level signal when the second driving voltage is not input from the first switch to the inverting unit, and a second switch connected to the bi-directional communication line, the second switch being switched off when the low level signal is input from the inverting unit to the second switch and being switched on when the high level signal is input from the inverting unit to the second switch.

7. The display apparatus according to claims 4 or 6, wherein the write disable signal comprises the high level signal and the write enable signal comprises the low level signal.

8. The display apparatus according to claim 1, wherein the bi-directional communication line comprises a DDC (Display Data Channel) communication line.

9. The display apparatus according to claim 1, wherein the data storing unit comprises an EDID (Extended Display Identification Data) EEPROM in which EDID information is stored.

10. The display apparatus according to claim 1, further comprising a display unit that displays a video based on a video signal processed by the video signal processing unit.

11. A control method of a display apparatus comprising a data storing unit that exchanges data with an external apparatus through a bi-directional communication line, and a video signal processing unit connected to the bi-directional communication line, the control method comprising:
determining whether the display apparatus is in a standby mode;
outputting a write enable signal to enable a write function of the data storing unit if it is determined that the display apparatus is in the standby mode; and
disconnecting the bi-directional communication line from the video signal processing unit when the write enable signal is output to the data storing unit.

12. The control method according to claim 11, further comprising:
determining whether the display apparatus is in a power-on mode;
outputting a write disable signal to the data storing unit to disable the write function of the data storing unit if it is determined that the display apparatus is in the power-on mode; and
connecting the bi-directional communication line with the video signal processing unit when the write disable signal is output to the data storing unit.

13. The control method according to claim 12, wherein the video signal processing unit operates in the power-on mode by a first driving voltage different in level from a second driving voltage applied to the data storing unit.

14. The control method according to claim 13, wherein the write disable signal comprises a high level signal and the write enable signal comprises a low level signal.

15. The control method according to claim 11, wherein the bi-directional communication line comprises a DDC communication line.

16. The control method according to claim 11, wherein the data storing unit comprises an EDID EEPROM in which EDID information is stored.

17. The control method according to claim 11, wherein the display apparatus further comprises a display unit that displays a video based on a video signal processed by the video signal processing unit.

18. A computer-readable recording medium storing a program, comprising:
a first set of instructions for determining whether a display apparatus is in a standby mode;
a second set of instructions for outputting a write enable signal to enable a write function of a data storing unit if it is determined that the display apparatus is in standby mode; and
a third set of instructions for disconnecting the bi-directional communication line from the video signal processing unit when the write enable signal is output to the data storing unit.

19. The computer-readable recording medium according to claim 18, wherein the instructions further determine whether the display apparatus is in a power-on mode; output a write disable signal to the data storing unit to disable the write function of the data storing unit if it is determined that the display apparatus is in the power-on mode; and connect the bi-directional communication line with the video signal processing unit when the write disable signal is output to the data storing unit.

20. The computer-readable recording medium according to claim 18, wherein the instructions further displays a video based on a video signal processed by the video signal processing unit.
